# EUROPÄISCHE PATENTSCHRIFT

(11) **EP 0 684 971 B1**
(45) Veröffentlichungstag und Bekanntmachung des Hinweises auf die Patenterteilung: **17.02.1999**
(21) Anmeldenummer: 94903835.0
(22) Anmeldetag: 20.12.1993
(51) Int. Cl.: C08L 53/02, D04H 13/00, D01F 6/58, C08J 5/18

(54) **GLASKLARES MATERIAL**
CRYSTAL-CLEAR MATERIAL
MATERIAU TRANSLUCIDE COMME LE VERRE

(43) Veröffentlichungstag der Anmeldung: 06.12.1995
(73) Patentinhaber: H.B. FULLER LICENSING & FINANCING, INC., Wilmington, Delaware 19801 (US)
(72) Erfinder: ENDRISS, Gerhard, D-85579 Neubiberg (DE)
(74) Vertreter: Maiwald, Walter, Dr. Dipl.-Chem.
(86) Internationale Anmeldenummer: EP9303614
(87) Internationale Veröffentlichungsnummer: WO9517467

(56) Entgegenhaltungen:
- EP-A- 0 304 124
- EP-A- 0 541 174

## Beschreibung

Die Erfindung betrifft ein elastomeres Gemisch mit einem Gehalt an einem A-B-A'-Block-Copolymeren und einem Harz sowie ggf. einem Weichmacher. Weiterhin betrifft die Erfindung aus einem solchen elastomeren Gemisch erzeugte Folien, Fasern, solche Fasern enthaltende Gewebe und solche Folien- bzw. Fasern enthaltendes Verbundmaterial.

Im Stand der Technik sind seit längerem elastomere Gemische bekannt, die grundsätzlich auf A-B-A'-Block-Copolymeren im Gemisch mit, deren Eigenschaften modifizierenden, Bestandteilen wie Harzen, Kunststoffen, Weichmachern, u.dgl. beruhen.

Einsatzgebiete solcher Gemische sind z.B. extrudierte Produkte wie Folien, Fasern, u.dgl.

Aus dem US-Patent 4,663,220 bzw. der zugehörigen deutschen Offenlegungsschrift DE 36 25 775 A1 sind elastomere extrudierbare Gemische, diverse damit hergestellte elastomere Produkte und Verfahren zu deren Herstellung bekannt, die im Gemisch mindestens 10 Gew.-% eines A-B-A'-Block-Copolymeren enthalten. Dabei sind die A, A'-Endblöcke Polystyrolblöcke, während der B-Mittelblock ein Poly(ethylen-butylen)-Block ist. Das Gemisch enthält weiterhin obligatorisch bis zu 90 Gew.-% eines Polyolefins, insbesondere Polyethylen, Polypropylen, Polybutylen und vergleichbare Copolymere. Entscheidend für seine Eigenschaften ist der hohe Polyolefinanteil. Dieses bekannte extrudierbare elastomere Gemisch soll vorzugsweise zu Mikrofasern verarbeitet werden, aus denen dann Vliesstoffe (nonwovens) mit erheblicher Eigenelastizität hergestellt werden sollen.

Solche extrudierbaren Gemische sind nicht glasklar, worauf es bei den vorgesehenen Verwendungen auch nicht ankommt.

Die europäische Patentanmeldung 0 304 124 offenbart elastomere Fasern, die aus einem ähnlichen Gemisch hergestellt werden. Dieses enthält mindestens ein elastomeres Block-Copolymer vom A-B-A'-Typ, wobei das Block-Copolymer ein SBS-Kautschuk sein kann. Das Gemisch enthält weiterhin ein niedermolekulares Polymer auf Styrolbasis, beispielsweise ein anionisches Polystyrol, ein a-Methylstyrolhomopolymer oder auch ein Copolymer auf der Basis von hydriertem Polystyrol und α-Methylstyrol. Der Gehalt an niedermolekularem Polymer im Gemisch soll zwischen 5-50 Gew.-% liegen. Das Gemisch kann weiterhin übliche Zusatzstoffe enthalten, darunter auch parafinische oder naphtenische Strecköle.

Das US-Patent 4,789,699 offenbart extrudierbare Gemische zur Herstellung von elastomeren Vliesfasermaterialien. Das Gemisch enthält als wesentliche Bestandteile ein elastomeres Polymer, ein Polyolefin und ein klebrigmachendes Harz, wobei das Polyolefin ggf. vollständig durch das Harz ersetzt sein kann. Das elastomere Polymer ist ggf. ein A-B-A'-Block-Copolymer, das klebrigmachende Harz vorzugsweise ein hydriertes Kohlenwasserstoffharz. Das Gemisch hat aufgrund des klebrigmachenden Harzes anscheinend Eigenschaften ähnlich einem Haftschmelzkleber.

Die europäische Patentanmeldung 0 211 466 offenbart schmelzspinnfähige Zusammensetzungen aus einem A-B-A'-Block-Copolymer als Hauptbestandteil, wobei es sich wiederum um einen SBS-Kautschuk handeln kann, im Gemisch mit einem kleineren Gehalt eines CD-Block-Copolymers (Polystyrol/Polybutadien).

Das US-Patent 4,803,177 beschreibt extrudierbare Zusammensetzungen zur Herstellung von Fasern, Mikrofasern und entsprechenden Vliesstoffen, wobei Ethylen- und EVA-Copolymere zusammen mit A-B-A'-Block-Copolymeren eingesetzt werden. Hierbei werden auch SEBS-Block-Copolymere verwendet.

Die europäische Patentanmeldung 0 315 007 offenbart Vliesstoffe, wobei wiederum SBS-Block-Copolymere im Gemisch enthalten sind.

Weitere elastomere Fasermaterialien auf der Grundlage von Gemischen aus A-B-A'-Block-Copolymeren und Polyolefinen sind den europäischen Patentanmeldungen 0 333 209, 0 333 210 und 0 333 212 entnehmbar.

Seit langem besteht ein bisher unbefriedigter Bedarf an extrudierbaren bzw. spritzbaren elastomeren Materialien, die farblos und glasklar sind und unter üblichen Anwendungsbedingungen auch farblos und glasklar bleiben. Vorzugsweise sollten diese Materialien auch lebensmittelrechtlich/medizinisch zulässig sein. Diese Materialien werden als Ersatzstoffe für PVC benötigt, dessen Entsorgung immer problematischer wird. Ein Beispiel ist der Bereich der Medizintechnik, beispielsweise der Einsatz für Infusionsschläuche, Plasmabeutel, Verbindungsstücke, u.dgl., die bisher durchweg aus PVC hergestellt wurden.

Nicht nur für diese Anwendungszwecke wird eine hohe Alterungsbeständigkeit des Materials hinsichtlich seiner wesentlichen Eigenschaften (Elastizität, Farblosigkeit, Klarheit) angestrebt. Bislang sind hierfür brauchbare Materialien in der Literatur jedoch nicht beschrieben worden.

Es ist daher vor diesem Hintergrund eine wesentliche Aufgabe der Erfindung, ein neuartiges extrudierbares elastomeres Gemisch zur Verfügung zu stellen, das die genannten Nachteile des Standes der Technik nicht oder nur in verringertem Umfang aufweist.

Eine weitere wesentliche Aufgabe der Erfindung liegt in der Bereitstellung eines extrudierbaren elastomeren Gemisches, das sich zu dauerelastischen, glasklaren und farblosen nichtblockenden Produkten wie beispielsweise Folien, Fasern, u.dgl. verarbeiten läßt.

Eine weitere wichtige Aufgabe der Erfindung liegt in der Bereitstellung eines elastomeren Gemisches, das die Erzeugung extrudierte Produkte wie Folien, Fasern, u.dgl. ermöglicht, die für sehr lange Zeiträume wie wenigstens etwa sechs Monate und vorzugsweise über ein Jahr elastisch, glasklar und farblos bleiben, ohne Brüchigkeit, Kristallbildung, Belagbildung od. dgl. zu entwickeln.

Außerdem ist es Aufgabe der Erfindung, ein elastomeres Gemisch zu schaffen, das sich zu Produkten mit gegenüber Folien größerer Härte, bei im übrigen ähnlichen Eigenschaften, verarbeiten läßt.

Eine weitere Aufgabe der Erfindung liegt in der Bereitstellung eines Gemisches der genannten Art, dessen Schmelzviskosität sich gezielt einstellen läßt.

Aufgabe der Erfindung ist weiterhin die Bereitstellung von extrudierten Produkten wie elastomeren Folien, elastomeren Fasern, diese enthaltenden elastischen Geweben und Verbundmaterialien.

Zur Lösung dieser Aufgaben dienen die Merkmale der unabhängigen Ansprüche. Vorteilhafte Weiterbildungen sind in den Unteransprüchen definiert und ergeben sich im übrigen aus der folgenden Beschreibung einiger Ausführungsbeispiele.

Das erfindungsgemäße elastomere Gemisch enthält wenigstens ein A-B-A'-Block-Copolymer. A und A' können dabei gleiche Endblöcke sein. Insoweit ähneln die erfindungsgemäß verwendeten A-B-A'-Block-Copolymere den im Stand der Technik überwiegend eingesetzten Triblöcken, insbesondere aus der von der Firma Shell hergestellten "Kraton^{R}"-Reihe. Jedoch trifft die Erfindung eine Auswahl, da sich die im Stand der Technik überwiegend verwendeten SBS-Compounds für die erfindungsgemäßen Zwecke weniger gut eignen. Mischungen auf SBS-Basis zeigen zu hohe Schmelzviskositäten, um sich beispielsweise gut verspinnen zu lassen und sind auch nicht ausreichend alterungsbeständig.

Weicht man auf die ebenfalls im Stand der Technik schon beschriebenen SEBS-Kautschuke, beispielsweise der Kraton^{R} G-Reihe aus, so ergeben sich bei üblichen Formulierungen mit Harzen und Streckölen häufig Probleme, da die extrudierten Produkte wie Folien, u.dgl. nicht blockfrei sind, die Kohäsion zu gering ist und/oder das Produkt keine ausreichenden elastischen Eigenschaften hat. Reine Kraton^{R} G-Typen haben eine viel zu hohe Schmelzviskosität, um zu Spinnvliesen, Laminaten und Folien verarbeitet zu werden; der in der Literatur vorbeschriebene Zusatz von Spezialölen, niedermolekularen Polyethylenen u.dgl. oder auch von Flüssigharzen führt im Versuch zwar zu einer Herabsetzung der Schmelzviskosität, aber eben durchweg unter Ausbildung der vorgenannten anderen Nachteile hinsichtlich Klebrigkeit, unzureichender Kohäsion und Verlust der Elastizität.

Es hat sich ebenfalls gezeigt, daß ein Ausweichen auf SIBS-Triblock-Polymertypen nicht erfolgversprechend ist, da Compounds auf dieser Grundlage keinen ausreichenden Modul und keine ausreichende Härte haben.

Die Erfindung löst diese Probleme, ausgehend von SEBS-Triblock-Copolymeren, durch Modifikation von deren Eigenschaften mit Spezialharzen, die in ihrem chemischen Aufbau so ausgebildet sind, daß sie mit wenigstens einem der Blöcke des Block-Copolymeren auf molekularer Ebene assoziieren können. Insbesondere eignen sich Harze mit Styrolgruppen, die mit den Styrolgruppen der Endblöcke A, A' aufgrund ihrer chemischen Ähnlichkeit zusammenwirken können. Ohne an eine bestimmte Theorie gebunden sein zu wollen und ohne daß die hier betrachteten Wechselwirkungen auf molekularer Ebene bisher auch nur annähernd ausreichend erforscht wären, wird doch gegenwärtig angenommen, daß diese Spezialharze zwischen dem Triblock-Copolymeren einerseits und dem zur Abwandlung von dessen Eigenschaften meist benötigten Weichmacher andererseits auf molekularer Ebene vermittelnd wirken. Für manche Anwendungen ist eine Modifikation des SEBS-Block-Copolymeren durch Weichmacher nicht nötig, weil die Modifikation der Eigenschaften des Block-Copolymeren durch das Spezialharz bereits ausreichen. Dies betrifft besonders Anwendungen, bei denen eine größere Härte des Materials erwünscht ist.

Erfindungsgemäß werde Triblock-Copolymere mit (Ethylen-Butylen) Polymer-Mittelblöcken besonders bevorzugt. Es können aber auch Triblock-Copolymere mit Poly(ethylen-butadien) Mittelblöcken und insbesondere die durch teilweise oder vollständige Hydrierung daraus abgeleiteten Elastomeren vorteilhaft eingesetzt werden.

Überraschenderweise zeigt sich, daß es nicht nur möglich ist, aus den erfindungsgemäßen elastomeren Gemischen Extrudate herzustellen, die dauerelastisch sind und nicht blocken. Es hat sich nämlich außerdem gezeigt, daß erfindungsgemäße elastomere Gemische glasklar und farblos sind und aus der Schmelze solcher elastomerer Gemische hergestellte Folien und ähnliche Extrudate über Zeiträume von mehr als einem Jahr wasserklar bleiben, ohne daß sich Oberflächenbelag bildet, Kristallbildungen auftreten oder sich Trübungen ausbilden. Dabei bleibt die Elastizität voll erhalten.

Insbesondere für besonders langlebige Produkte, bei denen die Farblosigkeit, Glasklarheit und Dauerelastizität über ein Jahr und länger unverändert bleiben soll, erweisen sich erfindungsgemäße Gemische als vorteilhaft, bei denen das A-B-A'-Block-Copolymere im Verhältnis zwischen etwa 2:1 und 1:2 mit einem Weichmacher gemischt ist, wofür insbesondere Weißöle vorteilhaft verwendet werden. Der Gehalt an kompatiblem polymeren Harz in solchen Gemischen liegt dann meist um so höher, je größer der Weichmacherölgehalt ist. Bei Block-Copolymer:Weißölverhältnissen von etwa 1:1 liegt der Gehalt an kompatiblem polymeren Harz vorzugsweise bei mindestens 10 Gew.-%, insbesondere bei 15 Gew.-% und darüber und kann 30 Gew.-% erreichen oder sogar überschreiten. Gelegentlich zeigen sich bei Harzgehalten von über 30 Gew.-% unerwünschte Eigenschaftsänderungen, indem die gesamte Gemischmasse wachsartige Eigenschaften annimmt.

Die vorstehende Gewichtsprozentangaben verstehen, wie auch alle anderen Gewichtsprozentangaben in dieser Beschreibung, sofern nicht ausdrücklich anders angegeben, als bezogen auf das Gesamtgewicht des elastomeren Gemisches bzw. Produktes. Geht man bei den erfindungsgemäßen Gemischen zu höheren Gehalten an Weichmacheröl über, beispielsweise im Bereich Block-Copolymer:Weißöl von 1:1,5, dann kann es vorteilhaft sein, höhere Mindestgehalte an polymerem Harz einzusetzen, oberhalb von 15 Gew.-% und bis oberhalb von 30 Gew.-%. Selbstverständlich ist bei der Wahl der Menge an Weichmacher und polymerem Harz deren Kompatibilität untereinander und mit dem gewählten Block-Copolymeren zu beachten, so daß eine Optimierung von Fall zu Fall erfolgen sollte.

Die Verwendung von Weißölen als Weichmacher hat den weiteren Vorteil, daß alle Komponenten des Produktes lebensmittelrechtlich und medizinisch unbedenklich sein können, so daß eine Anwendung der aus dem erfindungsgemäßen Gemisch erzeugten erfindungsgemäßen Folien, Fasern, Formteile, u.dgl. beispielsweise in der Medizintechnik als Ersatz für die dort üblicherweise verwendeten PVC-Teile möglich ist. Beispiele für solche Weißöle sind im Handel unter den Bezeichnungen Primol^{R} 352 von ESSO und Ondina^{R} G 33 von Shell erhältlich.

Insbesondere in Kombination mit Weißöl als Weichmacher und speziell dann, wenn sehr hohe Weißölanteile vorgesehen werden, wird man mit Vorteil als A-B-A'-Block-Copolymer einen gesättigten SEBS-Kautschuk der Art verwenden, wie er unter der Bezeichnung Kraton^{R} G 1652 von Shell angeboten wird. Es empfiehlt sich dann, als polymeres Harz ein Produkt auf α-Methylstyrolbasis einzusetzen und hierunter insbesondere ein α-Methylstyrol/Styrol-Copolymerharz. Geeignete im Handel erhältliche Produkte sind beispielsweise die von der Firma Hercules unter den Typbezeichnungen Kristalex^{R} F 120, Kristalex^{R} F 85 und Kristalex^{R} M 1181 angebotenen Erzeugnisse.

Die vorgenannten speziellen Kombinationen erweisen sich als besonders vorteilhaft. Dies liegt möglicherweise u.a. an den folgenden Eigenschaften der Einzelbestandteile, die sich besonders vorteilhaft und wahrscheinlich synergystisch kombinieren lassen:

Das als Elastomerkomponente besonders bevorzugt verwendete Kraton^{R} G 1652 ist ein Produkt mit einem relativ niedrigen Molekulargewicht, was einen günstigen Einfluß auf die Schmelzviskosität ergibt. Der gesättigte Poly(ethylen-butylen)-Mittelblock dieses SEBS-Elastomers ist besonders alterungsbeständig. Die verhältnismäßig hohe Shore A-Härte wie auch die hohe Dehnungsfestigkeit des Ausgangselastomeren erlauben eine hohe Ölzugabe und der im Verhältnis zum Beitrag des Mittelblocks hohe Styrolanteil bietet eine gute Basis, um das kompatible styrolgruppenhaltige polymere Harz "anzukoppeln" bzw. zu assoziieren. Günstig ist weiterhin, daß dieses Elastomer als feinteiliges Pulver geliefert werden kann, was die Produktionskosten verringert und die Herstellung von physikalischen Gemischen zusammen mit flüssigen Bestandteilen erleichtert.

Als Harzkomponente besonders bevorzugt werden dann die α-Methylstyrol/Styrol-Copolymerisate aus der Kristalex^{R}-Reihe von Hercules. Sie sind mit der Polystyrolphase des SEBS-Elastomeren, d.h. mit den A, A'-Endblöcken gut kompatibel, und bewirken einen Härteanstieg bei hohen Zusätzen von Weichmacherölen. Mit dem SEBS-Elastomer sind diese Copolymerisate besonders verträglich. Ihre Verwendung vermeidet Blocken und Klebrigkeit des Produktes. Diese polymeren Harze sind besonders wärmebeständig, und beständig gegen oxidativen Angriff, gegen UV-Einwirkung u.dgl. Ihre hohe Glasübergangstemperatur bedeutet, daß die Wärmebeständigkeit langfristig erhalten bleibt. Diese Harze sind wasserklar und farblos, was wesentlich dazu beiträgt, daß auch das elastomere Gemisch bzw. Produkt selbst ungefärbt und glasklar ist und bleibt.

Mit diesen beiden Komponenten wirkt als Weichmacher besonders vorteilhaft das genannte medizinische Weißöl vom Typ Primol^{R} 352 bzw. Ondina^{R} G 33 zusammen. Es wird zugesetzt, um die grundsätzlich noch recht harten und relativ hohe Schmelzviskositäten aufweisenden SEBS/Polymerharzgemische spinnbar, extrudierbar, blasbar u.dgl. zu machen, indem die Viskosität bei höheren Temperatur herabgesetzt wird und insgesamt eine Verminderung der Härte erfolgt. Dabei wird eine unerwünschte Plastifizierung der Polystyrolphase vermieden. Die genannten Weißöle sind besonders alterungsbeständig, oxidationsbeständig und zeigen eine besonders große Farb- und UV-Stabilität. Auch hierin wirken sie mit den anderen Bestandteilen zusammen.

Die erfindungsgemäße Komponentenkombination wird vorteilhaft mit weiteren üblichen Zusätzen versehen. Als Antioxidans hat sich besonders ein sterisch gehindertes Phenolderivat als günstig erwiesen, das im Handel von der Firma CIBA-GEIGY unter der Bezeichnung Irganox^{R} 1010 vertrieben wird. Dieses schwerflüchtige Produkt ist besonders verträglich mit Synthesekautschuken und Harzen und neigt nicht zu Verfärbungen. Es ist außerdem, da es nicht hautsensibilisierend oder hautreizend ist, für Zwecke geeignet, bei denen solche Effekte störend wären, wie beispielsweise bei medizinischen Anwendungen.

Als Lichtschutzmittel, kann ein Benzotriazolderivat eingesetzt werden, das ebenfalls von CIBA-GEIGY, unter dem Handelsnamen Tinuvin P^{R}, vertrieben wird. Dies ist ein thermisch sehr beständiges ebenfalls nicht hautreizendes UV-Lichtschutzmittel, das aber im Bereich des sichtbaren Lichts keine Absorption aufweist und von daher für ein farbloses, glasklares Produkt besonders geeignet ist.

Es dürften sich jedoch auch andere Oxidantien, wie etwa Irganox^{R} 1076 oder Weston 619 (Borg-Warner Chemicals) eignen, beispielsweise wenn das vorzugsweise verwendete Tinuvin P^{R} synergystisch mit Irganox^{R} 1076 zusammenwirken soll. Als Lichtschutzmittel kommt auch eine Kombination von Tinuvin^{R} 770 mit Tinuvin^{R} 322 in Betracht.

Im folgenden werden Merkmale und Vorteile der Erfindung an Ausführungsbeispielen in Gegenüberstellung mit Vergleichsbeispielen näher erläutert.

Ausgegangen wurde dabei von zwei Grundzusammensetzungen, die im folgenden als E1 und E2 bezeichnet werden. Die Zusammensetzung E1 bestand aus 100 Gewichtsteilen gesättigtem SEBS-Block-Copolymeren Kraton^{R} G 1652 im Gemisch mit 100 Gewichtsteilen Weißöl Primol^{R} 352 und 2 Gewichtsteilen Irganox^{R} 1010. Die Grundzusammensetzung E2 bestand aus 100 Gewichtsteilen Kraton^{R} G 1652 im Gemisch mit 150 Gewichtsteilen Primol^{R} 352 und 2 Gewichtsteilen Irganox^{R} 1010.

Beide Grundzusammensetzungen waren klar und farblos, zeigten aber durch den hohen Gehalt an Weichmacheröl eine sehr geringe Härte.

Zur Einstellung der Endeigenschaften wurden jetzt Proben dieser Grundzusammensetzungen mit zwei verschiedenen α-Methylstyrol/Styrol-Copolymerisatharzen vermischt, insbesondere, um die durch die Weichmacherzugabe stark herabgesetzte Härte wieder anzuheben. Dabei wurde einerseits Kristalex^{R} F 120 verwendet - die entsprechenden Ausführungsbeispiele laufen unter der Bezeichnung E1-120 bzw. E2-120, je nachdem von welcher Grundzusammensetzung (E1 oder E2) ausgegangen wurde. In einer anderen Versuchsreihe wurden die Grundzusammensetzungen probenweise mit Kristalex^{R} F 85 vermischt. Die entsprechenden Ausführungsbeispiele tragen die Bezeichnung E1-85 bzw. E2-85.

Es wurde versucht, den Einfluß größer werdender Zugabemengen von α-Methylstyrol/Styrolharz zu ermitteln. Hierzu wurden zwischen 0 und 35 Gew.-% Harz, bezogen auf die Gesamtmenge des Gemisches, zugesetzt. Bei der Bezeichnung der Ausführungs- bzw. Vergleichsbeispiele ist im folgenden der Gewichtsprozentanteil im Gesamtgemisch an α-Methylstyrol/Styrolharz Kristalex^{R} F 120 oder Kristalex^{R} F 85 in der Bezeichnung des Ausführungsbeispiels bzw. Vergleichsbeispiels angegeben. So bedeutet die Probenbezeichnung E1-120/5 ein Ausführungsbeispiel der Erfindung mit Kraton^{R} G 1652 und Primol^{R} 352 im Gewichtsverhältnis 1:1 sowie 5 Gewichtsprozent Gehalt an Kristalex^{R} F 120. Die Bezeichnung E2-85/30 bezeichnet hingegen ein erfindungsgemäßes Gemisch mit Kraton^{R} G 1652 und Primol^{R} 352 im Verhältnis 1:1,5 sowie 30 Gew.-% Kristalex^{R} F 85 im Gemisch. Alle diese Produkte enthalten die schon genannten zwei Gewichtsteile Irganox^{R} 1010.

In einem ersten Versuch wurde die Schmelzviskosität von erfindungsgemäßen Formulierungen in Abhängigkeit von der Menge des zugesetzten a-Methylstyrol/Styrolharzes bei verschiedenen Temperaturen und konstantem Schergefälle (1/Sekunde) gemessen. Dabei wurde eine Probenreihe E1-120/0 bis E1-120/20 verwendet, d.h. Proben mit Kraton^{R} G 1652 und Primol^{R} 352 im Verhältnis 1:1 und Zusätzen von 0, 5, 10, 15 bzw. 20 Gewichtsprozent Kristalex^{R} F 120 zum Gemisch.

Die Tabelle 1 zeigt die Ergebnisse dieser Messungen bei unterschiedlichen Temperaturen.

**Tabelle 1**

| Probe: | E1-120/0 | E1-120/5 | E1-120/10 | E1-120/15 | E1-120/20 |
|---|---|---|---|---|---|
| Temperatur | Schmelzviskosität (Pa.s) | | | | |
| 160° | 126 | 147 | 125 | 110 | 160 |
| 180°C | 30 | 33 | 31 | 27 | 35 |
| 200°C | 10 | 15 | 11 | 9 | 13 |

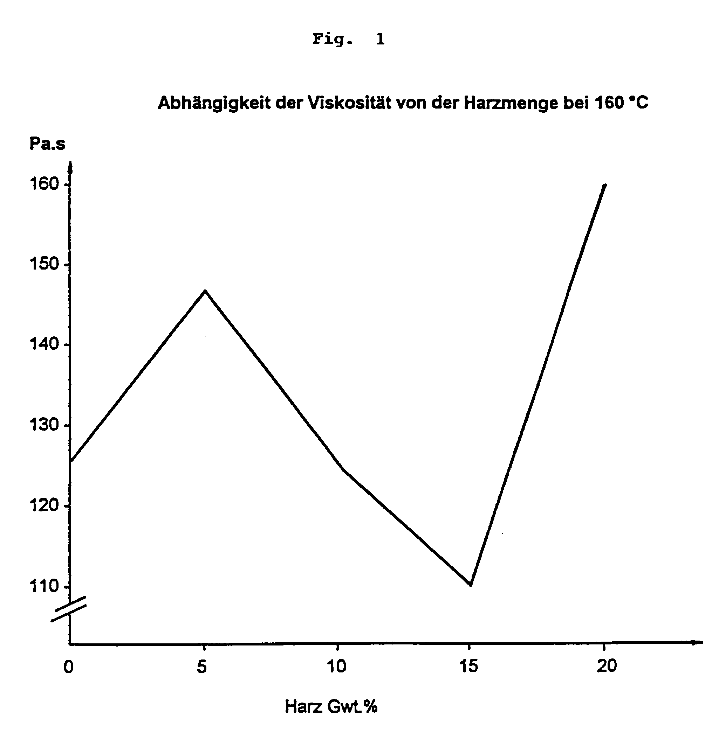

Erstaunlicherweise steigt die Viskosität der Schmelze zunächst bei Zugaben von 5 Gew.-% Harz an, geht dann bei etwa 10 Gew.-% Harzgehalt wieder etwa auf den Wert für 0 Gew.-% zurück, fällt bis 15 Gew.-% Harz weiter ab und steigt dann bei Steigerung der Harzmenge auf 20 Gew.-% deutlich wieder an. Für 160°C ist dies in der Fig. 1 graphisch veranschaulicht.

Aus solchen Schmelzen hergestellte Filme zeigten interessanterweise, daß das Optimum der Kohäsion des Filmes zwischen 10 und 20 Gew.-% Harzzugabe liegt, d.h. etwa dort, wo die Schmelzviskosität ein Minimum durchläuft.

An Filmen, die nach üblichen Extrusionsverfahren aus den Proben gemäß Tabelle 1 und Fig. 1 hergestellt worden waren, wurden jetzt die Shore A-Härte, die Zugfestigkeit und die Dehnung gemäß den einschlägigen DIN-Normen gemessen. Die Ergebnisse zeigt Tabelle 2. Mit steigender Harzmenge nehmen die Shore A-Härte und die Zugfestigkeit zu, während die Bruchdehnung etwa konstant ist.

**Tabelle 2**

| Probe: | E1-120/0 | E1-120/5 | E1-120/10 | E1-120/15 | E1-120/20 |
|---|---|---|---|---|---|
| Shore A-Härte (DIN 53505) | 24,0 | 27,0 | 32,5 | 37,5 | 42,0 |
| | | | | | |
| Zugsfestigkeit [N/mm²] (DIN 53504) | 1,32 | 1,45 | 1,95 | 2,34 | 2,41 |
| | | | | | |
| Dehnung [%] (DIN 53504) | 348 | 361 | 378 | 358 | 341 |

So erzeugte Filme wurden nach 13 Monaten Lagerung bei üblichen Umgebungsbedingungen (Innenraum/Raumtemperatur) optisch/visuell bewertet. Die Ergebnisse zeigt die Tabelle 3

**Tabelle 3**

| Probe | Ergebnis |
|---|---|
| E1-120/O | starke Kristallbildung an der Oberfläche |
| E1-120/10 | weißlicher Belag an der Oberfläche |
| E1-120/15 | wasserklar ohne Belag |
| E1-120/20 | wasserklar ohne Belag |
| E1-120/25 | wasserklar ohne Belag |
| E1-120/30 | wasserklar ohne Belag |
| | |
| E2-120/0 | starke Kristallbildung an der Oberfläche |
| E2-120/15 | teilw. weißlicher Belag an der Oberfläche |
| E2-120/20 | wasserklar ohne Belag |
| E2-120/30 | wasserklar ohne Belag |
| | |
| E1-85/0 | starke Kristallbildung an der Oberfläche |
| E1-85/20 | wasserklar ohne Belag |
| E1-85/35 | durchgehend weißliche, wachsartige Masse |
| | |
| E2-85/0 | starke Kristallbildung an der Oberfläche |
| E2-85/20 | klar bis sehr leichte Oberflächentrübung |
| E2-85/30 | wasserklar ohne Belag |

Das Ergebnis zeigt deutlich den Einfluß des Verhältnisses von Polymer:Öl:Harz auf das Langzeit-Alterungsverhalten der Filmoberfläche. Bei den Proben E1 mit geringerem Ölgehalt (Kraton^{R} G 1652/Primol^{R} 352 im Verhältnis 1:1), wird weniger Harz benötigt, um beständig klare Filme bzw. Spritzgußkörper o.dgl. zu erhalten als bei der Probenreihe E2, mit einem Verhältnis von Kraton^{R} G 1652 zu Primol^{R} 352 von 1:1,5.

Die Filme aus den Probenreihen mit Kristalex^{R} F 120 zeigten einen höheren Reißwiderstand im Vergleich mit den Filmen mit Kristalex^{R} F 85.

Wenn bei den genannten Rezepturen das Weißöl Primol^{R} 352 durch das ähnliche Weißöl Ondina^{R} G 33 ersetzt wird, ergibt sich ein etwa niedrigerer Absolutwert der Schmelzviskosität bei einer etwas insgesamt geringeren Änderung der Viskosität mit der Erhöhung der Schergeschwindigkeit. Für z.B. die Compoundierung kann es daher vorteilhaft sein, Ondina^{R} G 33 statt Primol^{R} 352 einzusetzen.

Die vorstehend im einzelnen beschriebenen Ausführungsbeispiele sind Rezepturen, die sich insbesondere für Filme, Folien, u.dgl. eignen, bei denen es auf entsprechende Elastizität sowie darauf ankommt, daß das Material auch für sehr lange Zeiträume glasklar und farblos ist und bleibt. Für andere Anwendungszwecke, bei denen ebenfalls andauernde Glasklarheit und Farblosigkeit gewünscht wird, jedoch größere Materialstärken auftreten und eine insgesamt größere Materialhärte gewünscht wird (Schläuche, Verbindungsteile u.dgl.) wird man Rezepturen mit (sehr) viel geringeren Weichmachergehalten wählen. In Spezialfällen kann der Weichmacher ganz weggelassen werden.

Für Anwendungszwecke wie z.B. das Verspinnen zu Fasern für Vliesstoffe u.dgl. wird man ebenfalls passende Rezepturen wählen, die von den vorstehend beschriebenen Ausführungsbeispielen durchaus abweichen können.

In Anwendungsbereichen wie etwa der Erzeugung von Verbundmaterialien aus Vlies und Folie (Kaschierungen u.dgl.) können durchaus erfindungsgemäße Filmmaterialien mit erfindungagemäßen Fasermaterialien kombiniert werden, wobei diese keineswegs die gleiche Rezeptur aufweisen müssen.

## Patentansprüche

1. Elastomeres Gemisch, mit Gehalten an
(i) wenigstens einem A-B-A'-Block-Copolymeren, bei dem A und A' gleiche oder verschiedene von styrolgruppenhaltigen Monomeren abgeleitete Polymerendblöcke sind und B ein von ethylen/butylen oder -butadiengruppenhaltigen Monomeren abgeleiteter elastomerer Mittelblock ist;
(ii) wenigstens einem polymeren Harz, welches im wesentlichen aus Gruppen aufgebaut ist, die mit denen der A, A' und/oder B-Blöcke des A-B-A'-Block-Copolymeren kompatibel sind,
(iii)einem Weichmacher auf Weißölbasis,
sowie gegebenenfalls Zusätzen wie Antioxidantien, Wärme- bzw. Lichtschutzmitteln und dergleichen, bei dem Art und Menge aller vorgenannten Komponenten so gewählt sind, daß das elastomere Gemisch
(a) bei Temperaturen oberhalb Raumtemperatur und bis wenigstens 50°C im wesentlichen nicht klebrig ist, und
(b) bei höherer Temperatur extrudierbar ist,
und das extrudierte Gemisch über Zeiträume von mindestens sechs Monaten, insbesondere von wenigstens zwölf Monaten, bei üblichen Umgebungsbedingungen und Raumtemperatur im wesentlichen
(c) nichtblockend, und
(d) dauerelastisch sowie
(e) glasklar, und
(f) farblos ist,
ausgenommen ein Gemisch, bestehend aus 100 Gewichtsteilen eines Styrol-Ethylen/Butylen-Styrol Blockcopolymerisats, 100 Gewichtsteilen eines Paraffinöls, 20 Gewichtsteilen eines auf α-Methylstyrol basierenden Harzes, 50 Gewichtsteilen Polypropylen und 0,7 Gewichtsteilen Antioxidantien.

2. Gemisch nach Anspruch 1,
**dadurch gekennzeichnet,** daß das wenigstens eine polymere Harz im wesentlichen aus Gruppen aufgebaut ist, die mit denen der A, A' und/oder B-Blöcke des A-B-A'-Block-Copolymeren chemisch gleichartig oder gleich sind.

3. Gemisch nach Anspruch 1 oder 2,
**dadurch gekennzeichnet,** daß die A und A'-Blöcke des A-B-A'-Block-Copolymeren Polystyrolblöcke sind.

4. Gemisch nach einem der Ansprüche 1 bis 3,
**dadurch gekennzeichnet**, daß die B-Blöcke des A-B-A'-Block-Copolymeren (gegebenenfalls teil-)hydrierte, insbesondere gesättigte, Poly(ethylen-butylen) oder Poly(ethylen-butadien)Blöcke sind.

5. Gemisch nach einem der Ansprüche 1 bis 4,
**dadurch gekennzeichnet,** daß das A-B-A'-Block-Copolymere ein gesättigtes SEBS-Block-Copolymer ist.

6. Gemisch nach einem der Ansprüche 1 bis 5,
**dadurch gekennzeichnet,** daß das polymere Harz von Styrol abgeleitete Gruppen enthält.

7. Gemisch nach Anspruch 6,
**dadurch gekennzeichnet,** daß das polymere Harz eine α-Methylstyrolkomponente aufweist und insbesondere ein α-Methylstyrol/Styrol-Copolymer ist.

8. Gemisch nach einem der Ansprüche 1 bis 7,
dadurch gekennzeichnet, daß der Weichmacher lebensmittelrechtlich/medizinisch zugelassenes Weißöl ist.

9. Gemisch nach einem der Ansprüche 1 bis 8,
**dadurch gekennzeichnet,** daß das Gemisch ein Lichtschutzmittel, insbesondere ein thermisch unempfindliches UV-Lichtschutzmittel, enthält.

10. Gemisch nach einem der Ansprüche 1 bis 9, enthaltend:
- 30-90 Gew.-% Block-Copolymer
- mindestens 5 Gew.-% polymeres Harz
- 0-65 Gew.-% Weichmacher
sowie gegebenenfalls
- jeweils weniger als 1 % Antioxidans, Lichtschutzmittel, Gleitmittel, und dergleichen.

11. Gemisch nach Anspruch 10,
wobei das Gemisch Block-Copolymer und Weichmacher im Verhältnis von etwa 1:2 bis etwa 2:1, vorzugsweise etwa im Verhältnis zwischen 1:1 und 1:1,5 enthält.

12. Gemisch nach Anspruch 10 oder 11,
wobei das Gemisch etwa 5 bis 30 Gew.-% polymeres Harz, vorzugsweise mindestens 10 Gew.-% Harz und, bei Weichmacherölgehalten höher als der Block-Copolymergehalt, mindestens 15 Gew.-% Harz, bezogen auf das Gesamtgewicht des Gemisches, enthält.

13. Gemisch nach einem der Ansprüche 1 bis 12, enthaltend: ein gesättigtes SEBS-Block-Copolymer und als Weichmacher wenigstens ein Weißöl, im wesentlichen im Gewichtsverhältnis von 1:1 und zusätzlich zwischen etwa 10 und etwa 30 Gew.-%, bezogen auf das Gesamtgewicht des Gemisches, α-Methylstyrol/Styrol-Copolymer-Harz sowie gegebenenfalls jeweils unter 1 Gew.-% Gleitmittel (Erucamid), Antioxidans, Lichtschutzmittel und dergleichen.

14. Gemisch nach einem der Ansprüche 1 bis 12, enthaltend: ein gesättigtes SEBS-Block-Copolymer und als Weichmacher wenigstens ein Weißöl, im wesentlichen im Gewichtsverhältnis 1:1,5 und zusätzlich zwischen etwa 15 und etwa 35 Gew.-%, bezogen auf das Gesamtgewicht des Gemisches, α-Methylstyrol/Styrol-Copolymer-Harz sowie gegebenenfalls jeweils unter 1 Gew.-% Gleitmittel (Erucamid), Antioxidans, Lichtschutzmittel und dergleichen.

15. Elastomere Folie, erzeugt aus einem elastomeren Gemisch gemäß einem der Ansprüche 1 bis 14.

16. Elastomere Faser, erzeugt aus einem elastomeren Gemisch gemäß einem der Ansprüche 1 bis 14.

17. Elastomeres Gewebe in gewebter oder Vliesform, enthaltend Fasern gemäß Anspruch 16, gegebenenfalls neben anderen Fasern.

18. Verbundmaterial, im wesentlichen bestehend aus wenigstens einer Folie und wenigstens einer mit dieser verbundenen Lage von Vliesmaterial, wobei die Folie und/oder das Vliesmaterial ein elastomeres Material nach einem der Ansprüche 15 bis 17 umfassen.

## Claims

1. Elastomer blend, with contents of
(i) at least one A-B-A'block copolymer, in which A and A' are the same or different polymer end blocks derived from monomers containing styrene groups, and in which B is an elastomer middle block derived from monomers containing ethylene/butylene or ethylene/butadiene groups;
(ii) at least one polymer resin, which is essentially built from groups, which are compatible with those of the A, A' and/or the B blocks of the A-B-A' block copolymer;
(iii) one plasticizer on white oil, basis, as well as, if applicable, additives like antioxidants, agents for heat and/or light protection and the like, where the kind and amount of all aforementioned components are selected so, that the elastomer blend
a) is substantially not sticky at temperatures above room temperature and up to at least 50°C, and
b) can be extruded at higher temperatures and the extruded blend is
c) non-blocking, and
d) permanently elastic, as well as
e) clear as glass, and
f) colourless
for a minimum time period of six months, in particular for at least twelve months, at customary ambient conditions and room temperature, with the exception of a blend consisting of 100 parts of weight of a styreneethylene/butylene-styrene block copolymerizate, 100 parts of weight of a paraffin oil, 20 parts of weight of a resin basing on α-methylstyrene, 50 parts of weight of polypropylene and 0.7 parts of weight of antioxidants.

2. Blend according to claim 1, characterised in that the at least one polymer resin is built essentially from groups, which are chemically, similar or identical to the A, A' and/or B blocks of the A-B-A' block copolymer.

3. Blend according to claim 1 or 2, characterised in that the A and A' blocks of the A-B-A' block copolymer are polystyrene blocks.

4. Blend according to any one of claims 1 to 3, characterised in that the B blocks of the A-B-A' block copolymer are (partly-, if applicable) hydrated, in particular saturated, poly-(ethylene-butylene) or poly-(ethylene-butadiene) blocks.

5. Blend according to any one of claims 1 to 4, characterised in that the A-B-A' block copolymer is a saturated SEBS block copolymer.

6. Blend according to any one of claims 1 to 5, characterised in that the polymer resin contains groups derived from styrene.

7. Blend according to claim 6, characterised in that the polymer resin comprises an α-methylstyrene component and in particular is an α-methylstyrene/styrene copolymer.

8. Blend according to any one of claims 1 to 7, characterised in that the plasticizer is a white oil which is legally admitted for food and/or medical use.

9. Blend according to any one of claims 1 to 8, characterised in that the blend contains an agent for light protection, in particular a thermally insensitive agent for UV-light protection.

10. Blend according to any one of claims 1 to 9, containing:
- 30-90 wt.% of block copolymer
- at least 5 wt.% of polymer resin
- 0-65 wt.% of plasticizer, as well as, if applicable
- less than 1% each of antioxidant, light protection agent, lubricant or slip additive the like.

11. Blend according to claim 10, in which the blend contains block copolymer and plasticizer in a ratio of approximately 1:2 to approximately 2:1, preferably in a ratio of approximately between 1:1 and 1:1.5.

12. Blend according to claim 10 or 11, in which the blend contains approximately 5 to 30 wt.% of polymer resin, preferably at least 10 wt.% of resin and, if the content of plasticizer oil is higher than the content of the block copolymer, at least 15 wt.% of resin, based on the total weight of the blend.

13. Blend according to any one of claims 1 to 12, containing:
a saturated SEBS block copolymer and at least one white oil as plasticizer, essentially in a weight ratio of 1:1, and additionally between approximately 10 wt.% and approximately 30 wt.%, based on the total weight of the blend, of α-methylstyrene/styrene copolymer resin, as well as, if applicable, below 1 wt.% each of lubricant or slip additive (Erucamid), antioxidant, light protection agent and the like.

14. Blend according to any one of claims 1 to 12, containing:
a saturated SEBS block copolymer and at least one white oil as plasticizer, essentially in a weight ratio of 1:1.5 and additionally between approximately 15 wt.% and approximately 35 wt.%, based on the total weight of the blend, of α-methylstyrene/styrene copolymer resin as well as, if applicable, below 1 wt.% each of lubricant or slip additive (Erucamid), antioxidant, light protection agent and the like.

15. Elastomer film, made from an elastomer blend according to any one of claims 1 to 14.

16. Elastomer fibre, made from an elastomer blend according to any one of claims 1 to 14.

17. Elastomer textile in woven form or in the form of an nonwoven fleece, containing fibres according to claims 16 beside other fibres, if applicable.

18. Composite material, essentially made of at least one film and at least one layer of nonwoven fleece material connected with the film, in which the film and/or the nonwoven fleece material comprise an elastomer material according to any one of claims 15 to 17.

## Revendications

1. Mélange élastomère, contenant :
(i) au moins un copolymère séquencé A-B-A', dans lequel A et A' représentent des séquences polymères identiques ou différentes, dérivées de monomères contenant des groupes styrène, et B représente une séquence centrale élastomère dérivée de monomères contenant des groupes éthylène/butylène ou -butadiène ;
(ii) au moins une résine polymère, qui est constituée essentiellement de groupes qui sont compatibles avec les séquences A, A' et/ou B du copolymère séquencé A-B-A',
(iii) un plastifiant à base d'huile blanche,
ainsi éventuellement que des additifs tels que des antioxydants, des agents de protection contre la chaleur ou respectivement la lumière, et additifs analogues, où les composants précités étant choisis, en ce qui concerne leurs natures et leurs quantités, de telle façon que le mélange élastomère
(a) ne soit essentiellement pas collant à des températures supérieures à la température ambiante, et jusqu'à au moins 50°C, et
(b) soit extrudable à une température supérieure,
et que le mélange extrudé, sur une durée d'au moins six mois, et en particulier sur une durée d'au moins douze mois, et dans les conditions d'environnement habituelles et à la température ambiante, soit essentiellement
(c) non bloquant, et
(d) durablement élastique, ainsi que
(e) clair ou transparent ou translucide comme le verre, et
(f) incolore,
à l'exception d'un mélange constitué de 100 parties en poids d'un copolymère séquencé styrène-éthylène/butylène-styrène, 100 parties en poids d'une huile paraffinique, 20 parties en poids d'une résine à base d'α-méthylstyrène, 50 parties en poids de polypropylène et 0,7 partie en poids d'antioxydants.

2. Mélange selon la revendication 1,
**caractérisé en ce que** au moins une résine polymère est essentiellement constituée de groupes qui sont chimiquement identiques ou semblables à ceux des séquences A, A' et/ou B du copolymère séquencé A-B-A'.

3. Mélange selon la revendication 1 ou 2,
**caractérisé en ce que** les séquences A et A' du copolymère A-B-A' sont des séquences de polystyrène.

4. Mélange selon l'une quelconque des revendications 1 à 3,
**caractérisé en ce que** les séquences B du copolymère A-B-A' sont des séquences poly(éthylène-butadiène) ou poly(éthylène-butylène), (éventuellement partiellement) hydrogénées, en particulier saturées.

5. Mélange selon l'une quelconque des revendications 1 à 4,
**caractérisé en ce que** le copolymère séquencé A-B-A' est un copolymère séquencé SEBS saturé.

6. Mélange selon l'une quelconque des revendications 1 à 5,
**caractérisé en ce que** la résine polymère contient des groupes dérivés du styrène.

7. Mélange selon la revendication 6,
**caractérisé en ce que** la résine polymère présente un composant α-méthylstyrène et est en particulier un copolymère α-méthylstyrène/styrène.

8. Mélange selon l'une quelconque des revendications 1 à 7,
**caractérisé en ce que** le plastifiant est une huile blanche compatible avec les produits alimentaires/pharmaceutiques.

9. Mélange selon l'une quelconque des revendications 1 à 8,
**caractérisé en ce que** le mélange contient un agent de protection contre la lumière, en particulier un agent de protection contre la lumière UV non sensible aux effets thermiques.

10. Mélange selon l'une quelconque des revendications 1 à 9, contenant :
- 30-90 % en poids de copolymère séquencé
- au moins 5 % en poids de résine polymère
- 0-65 % en poids de plastifiant
ainsi éventuellement que
- à chaque fois moins de 1 % d'antioxydant, agent de protection contre la lumière, lubrifiant, et analogues.

11. Mélange selon la revendication 10,
dans lequel le mélange contient un copolymère séquencé et un plastifiant dans un rapport d'environ 1:2 à environ 2:1, de préférence environ dans le rapport compris entre 1:1 et 1:1,5.

12. Mélange selon la revendication 10 ou 11,
dans lequel le mélange contient environ 5 à 30 % en poids de résine polymère, de préférence au moins 10 % en poids de résine et, dans le cas d'une teneur en huile plastifiante supérieure à celle du copolymère séquencé, au moins 15 % en poids de résine, par rapport au poids total du mélange.

13. Mélange selon l'une quelconque des revendications 1 à 12, contenant :
un copolymère séquencé SEBS saturé et, comme agent plastifiant, au moins une huile blanche, essentiellement dans un rapport en poids 1:1, et, de plus, entre environ 10 et environ 30 % en poids, par rapport au poids total du mélange, d'une résine de copolymère d'α-méthylstyrène/styrène, ainsi éventuellement que, à chaque fois dans une proportion inférieure à 1 % en poids, un agent lubrifiant (amide de érucique), un antioxydant, un agent de protection contre la lumière et additifs analogues.

14. Mélange selon l'une quelconque des revendications 1 à 12, contenant :
un copolymère séquencé SEBS saturé et, comme agent plastifiant, au moins une huile blanche, essentiellement dans un rapport en poids 1:1,5, et, de plus, entre environ 15 et environ 35 % en poids, par rapport au poids total du mélange, d'une résine de copolymère d'α-méthylstyrène/styrène, ainsi éventuellement que, à chaque dans une proportion inférieure à 1 % en poids, un agent lubrifiant (amide de l'acide érucique), un antioxydant, un agent de protection contre la lumière et additifs analogues.

15. Feuille élastomère, obtenue à partir d'un mélange élastomère selon l'une quelconque des revendications 1 à 14.

16. Fibre élastomère obtenue à partir d'un mélange élastomère selon l'une quelconque des revendications 1 à 14.

17. Produits textiles élastomères sous la forme tissée ou sous la forme d'une nappe (« Vlies »), contenant des fibres selon la revendication 16, et éventuellement d'autres fibres.

18. Matériau de liaison, constitué essentiellement d'au moins une feuille et d'au moins une couche de matériau en nappe liée à ladite feuille, la feuille et/ou le matériau en nappe comprenant un matériau élastomère selon l'une quelconque des revendications 15 à 17.
